# EUROPEAN PATENT APPLICATION

(11) **EP 2 086 229 A1**
(43) Date of publication of application: **05.08.2009**
(21) Application number: 08009737.1
(22) Date of filing: 28.05.2008
(51) Int. Cl.: H04N 7/15, H04M 3/56, H04N 5/268

(54) **Display system and display method capable of receiving multiple sources and with synchronous multiple outputs**

(30) Priority: 03.12.2007 TW 96145942
(71) Applicant: National Applied Research Laboratories National Center for High-performance Computing, Science-Based Industrial Park Hsin-Chu City (TW)
(72) Inventor: Wu, Jyh-Horng, East District Taichung City (TW); Lin, Shyi-Ching, East District Hsinchu City (TW); Chen, Lun-Chi, Kaohsiung City (TW); Wang, An-Pang, Jhonghe City Taipei County (TW); Yu, Hui-Hung, North District Hsinchu City (TW); Lee, Jen-Gaw, Jhubei City Hsinchu County (TW); Chou, Kuan-Chou, Wunshan District Taipei City (TW)
(74) Representative: Schaeberle, Steffen

(57) **Abstract**

The synchronous briefing or visual playback in different areas and capability of receiving multiple image sources (11, 21, 31 ) are achieved by connecting various briefing subsystems (10, 20, 30) in different areas via the Internet. One or more image sources (11, 21, 31) are configured in each briefing subsystem (10, 20, 30) and each connected to a server (13, 23, 33) of the subsystem (10, 20, 30) via physical or wireless network. The server (13, 23, 33) of each briefing subsystem (10, 20, 30) transmits briefing or image data to a playback device (1 5, 25, 35) for outputting purpose via physical or wireless network. The internet-connected servers (13, 23, 33) in all the briefing subsystems (10, 20, 30) are capable of transmitting briefing or image data to one another via the Internet such that briefing or image outputting in one subsystem (10, 20, 30) can be synchronously performed in other subsystems (10, 20, 30).

## Description

The present invention relates to a display method and a display system according to the pre-characterizing clauses of claims 1 and 8.

The present invention relates to a display system and a display method, and more specifically, to a display system and a display method capable of receiving multiple sources and with synchronous multiple outputs.

Generally, projection system used for briefing is made up of a personal computer (desktop computer or laptop computer), a projector, and a projecting screen. More than one personal computer as multiple sources is quite general in the prior art for more flexibility.

If one projection system is configured at a first place and another projection system is configured at a second place, in which the first place and the second place are two different place distanced away, for example, two independent conference rooms, two office buildings, even two different geographical areas, using one projector and another projector, which are configured in the first place and the second place respectively, to broadcast image signals from the same signal source is no longer a choice in the prior art. This is because with one single personal computer located in the first place, there is no way to successfully transmit image signals to the projector located in the second place by its intrinsic transmission configuration. Projection systems in the prior art can only be realized with the limitation of single conference room or places with limited space range such as the stadiums, activity centers, partial area of a exhibition hall, etc.

This in mind, the present invention aims at providing a display method and a display system that receive data from multiple sources and transmit the data synchronously to multiple outputs.

This is achieved by a display method according to claim 1 and a display system according to claim 8. The dependent claims pertain to corresponding further developments and improvements.

As will be seen more clearly from the detailed description following below, the claimed display method and display system include a plurality of servers that connect with one another and each is capable of receiving image signals and commands from different signal sources and transmitting the image signals to a corresponding playback device.

In the following, the invention is further illustrated by way of example, taking reference to the accompanying drawings. Thereof

Fig.1 to Fig.4 are illustrations of embodiments of projection system according to the prior art,

Fig.5 is an illustration of a display system having multiple sources and synchronous multiple outputs according to the present invention,

Fig.6 is a flow chart of the first exemplary embodiment of a display method having multiple sources and synchronous multiple outputs according to the present invention,

Fig.7 to Fig.11 are illustrations of the operation of the first exemplary embodiment according to the present invention,

Fig.12 is a flow chart of the second exemplary embodiment of the display method having multiple sources and synchronous multiple outputs according to the present invention, and

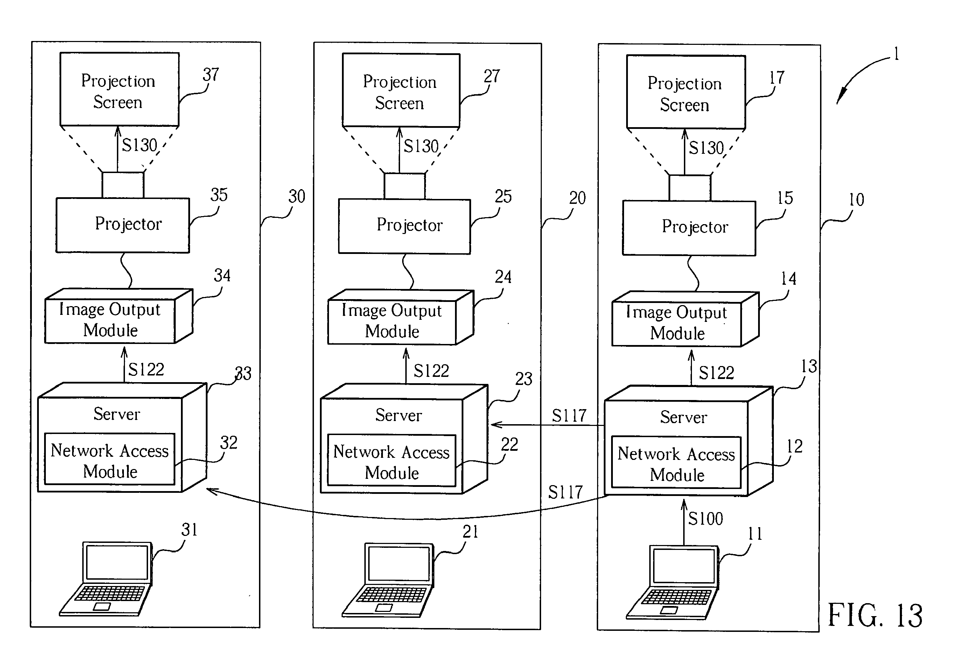

Fig.13 to Fig.14 are illustrations of the operation of the second exemplary embodiment according to the present invention.

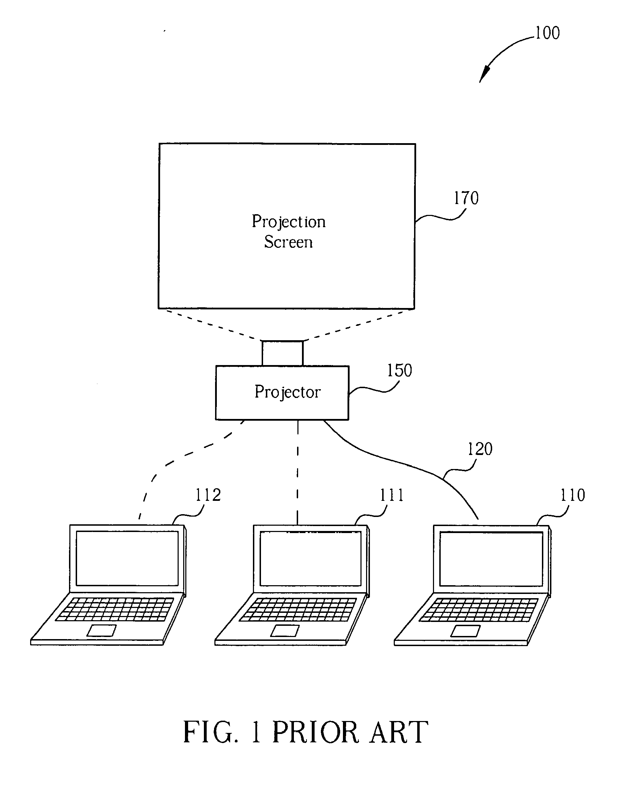

Please refer to Fig.1, which is an illustration of a projection system 100 according to the prior art. The projection system 100 comprises a plurality of laptop computers 110, 111, 112 capable of outputting image signals via VGA interface, RCA interface, S component interface, or HDMI interface. The projection system 100 also comprises a projector 150, and a projection screen 1 70. The laptop computers 110, 111, 112 transmits image signals (usually dynamic or static image signals representing content showed on the monitor of the laptop computers) to the projector 150 via physical signal line 120 and the projector 150 then projects the image signals onto the projection screen 170. The signal line 120 can be VGA, RCA, S component, or HDMI compliant. Fig.1 shows that the laptop computer 110 to the projector 150 transmits the image signals. If different laptop computer, for example, laptop computer 111 or laptop computer 112, is selected to transmit image signals to the projector 150, the signal line 120 should be manually unplugged from laptop computer 110 and be plugged into laptop computer 111 or laptop computer 112 as shown in the dashed line in Fig.1. It is not a very convenient way to switch the source of image signal and with the limitation of the length of the signal line 120, the laptop computers 110, 111, 112 should be placed within a short distance from the projector 150.

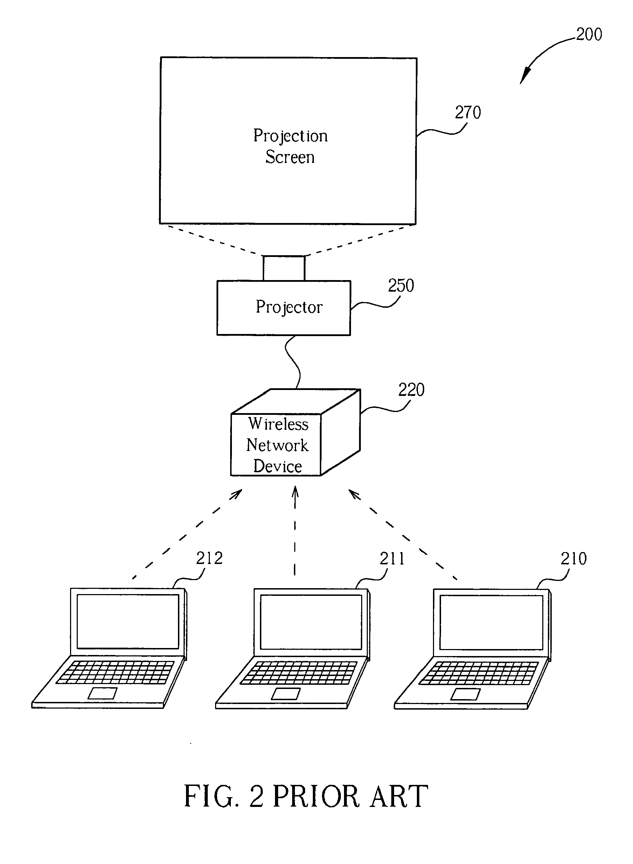

Please refer to Fig.2. An improvement for the inconvenience of switching between signal sources in the projection system 100 is made in the projection system 200 that comprises a plurality of laptop computers 210, 211, 212 with wireless transmission capability, a wireless network device 220, a projector 250, and projection screen 270. The laptop computers 210, 211, 212 transmit image signals to the wireless network device 220 (a wireless access point or a wireless router) wirelessly other than via physical line as in the embodiment in Fig.1. The wireless network device 220 then transmits the received image signals to the projector 250 via VGA interface, RCA interface, S component interface, HDMI interface, or any available data transmission interface. Finally, the projector 250 projects the image signals onto the projection screen 270. Switching between different laptop computers and outputting the image signals can be achieved by simply configuring some application in the laptop computers.

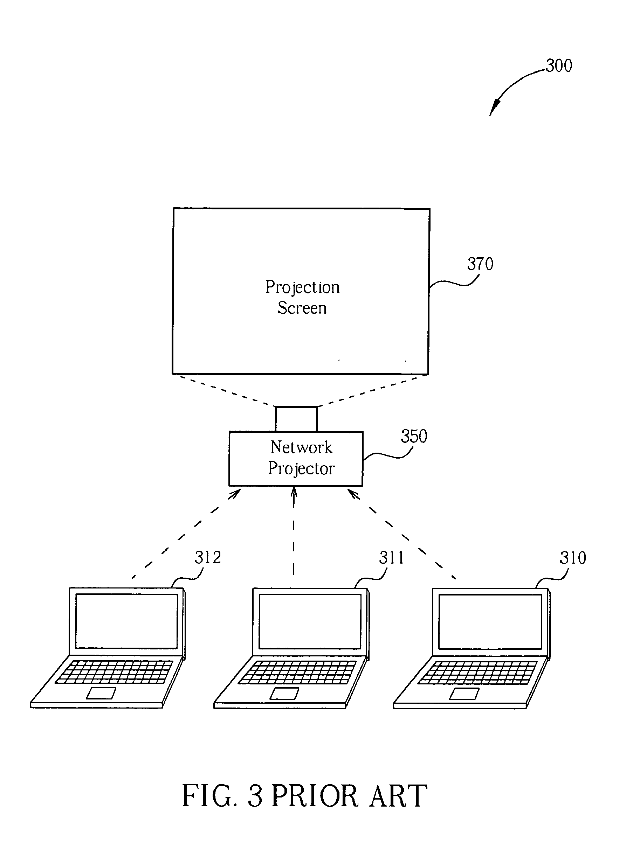

Some digital projectors with built-in network connectivity are introduced for even more simple, highly integrated conference scheme. Fig.3 shows that the projection system 300 comprises a plurality of laptop computers 310, 311, 312 with wireless transmission capability, a digital projector 350 with built-in network connectivity, and a projection screen 370. The digital projector 350 can receive image signals from the laptop computers 310, 311, 312 with its built-in network transmission module and then projects the image signals onto the projection screen 370. Switching between different laptop computers and outputting the image signals can be achieved by simply configuring the source setting in the digital projector 350.

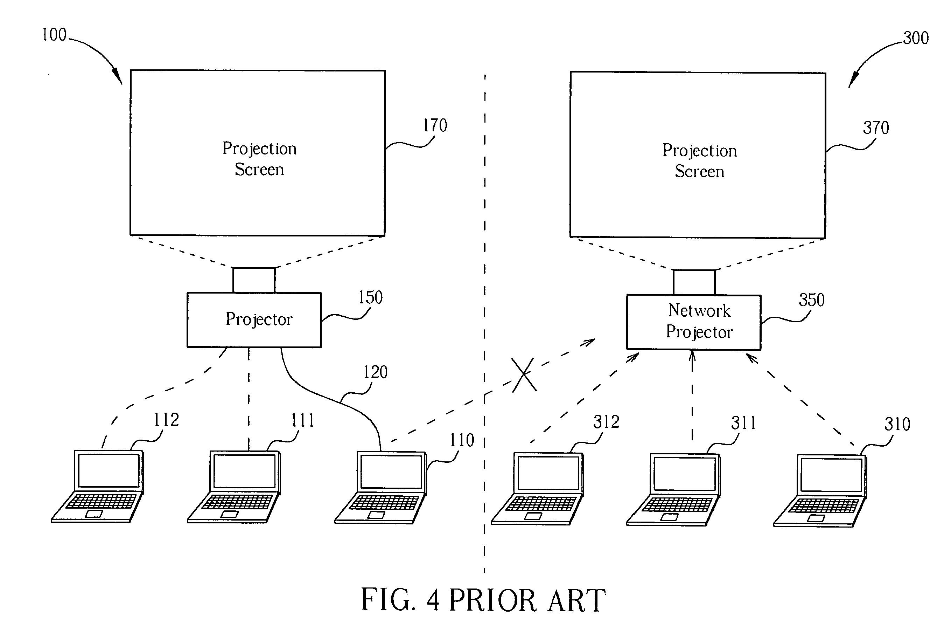

Please refer to Fig.4. If the projection system 100 is configured at a first place and the projection system 300 is configured at a second place, in which the first place and the second place are two different place distanced away, for example, two independent conference rooms, two office buildings, even two different geographical areas, using the projector 150 and the projector 350 to broadcast image signals from the same signal source is no longer a choice in the prior art. In Fig.4, the laptop computer 110 has no way to successfully transmit image signals to the projector 350 by its intrinsic transmission configuration.

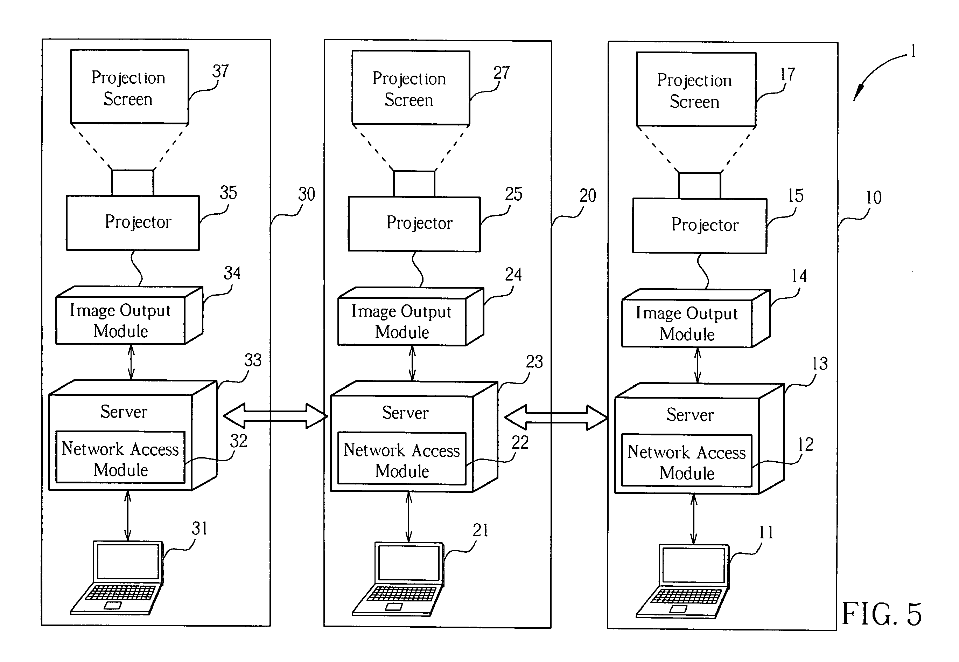

To utilize existing projectors in different conference rooms, office buildings, or geological areas (for example, the North America and the South America) to broadcast image signal of a computer in a synchronous way, the present invention, also illustrated in Fig.5, discloses the first exemplary embodiment of a synchronous display system 1 having multiple sources and multiple outputs. The display system 1 comprises three subsystems 10, 20, 30, each having connection with one another between the servers 13, 23, 33 via the local area network (LAN), the virtual private network (VPN), the metropolis area network (MAN), or the wide area network (WAN). Distances between the subsystems 10, 20, 30 are of little significance in the present invention. Taking the first exemplary embodiment of the present invention for example, the first subsystem 10 can be located in California, the second subsystem 20 can be located in New York, and the third subsystem 30 can located in Chicago. In another embodiment of the present invention, the first subsystem 10 can be in Taiwan, the second subsystem 20 can be in U.S., and the third subsystem can be in Germany. Still in another embodiment, the first subsystem 10 and the second subsystem 20 can be located in different floors of the same office building while the third subsystem 30 is located in another office building. Although three subsystems 10, 20, 30 are introduced in the first exemplary embodiment, the present invention can certainly be applied to have two, three, four, or more individual briefing systems (such as video meeting conference systems, media classrooms, briefing rooms, conference rooms), each located or belonging to one, two, three, or more same or distinct areas. The technical feature of the present invention can fully integrate each of the subsystems into one synchronous display system characterized with multiple sources and multiple outputs. The following description simply uses three subsystems as example.

As Fig.5 shows, the first subsystem 10 comprises a first laptop computer 11, a first server 13, a first image output module 14, a first projector 15, and a first screen 17. The first server 13 for the first laptop computer 11 to transmit image signals via physical network or wireless network comprises a first network access module 12. The first server 13 is also configured for transmitting image signals (and control commands) to the first image output module 14 via wireless network or local area network. The first server 13 and the first image output module 14 can also be separate components or processes within a single computer system and the first server 13 puts the image signals and control commands onto internal bus of the computer system for the first image output module 14. The first image output module 14 connects with the first projector 1 5 via VGA interface, RCA interface, S component interface, HDMI interface, or microwave transmission interface and the image signals are transmitted to the first projector 15 for being projected onto the first screen 17. The image signals transmitted by the first laptop computer 11 to the first projector 15 for being projected onto the first screen 1 7 can be dynamic or static image signals representing content showed on the monitor of the first laptop computer 11.

The second subsystem 20 comprises a second laptop computer 21, a second server 23, a second image output module 24, a second projector 25, and a second screen 27. The second server 23 for the second laptop computer 21 to transmit image signals via physical network or wireless network comprises a second network access module 22. The second server 23 is also configured for transmitting image signals (and control commands) to the second image output module 24 via wireless network or local area network. The second server 23 and the second image output module 24 can also be separate components or processes within a single computer system and the second server 23 puts the image signals and control commands onto internal bus of the computer system for the second image output module 24. The second image output module 24 connects with the second projector 25 via VGA interface, RCA interface, S component interface, HDMI interface, or microwave transmission interface and the image signals are transmitted to the second projector 25 for being projected onto the second screen 27. The image signals transmitted by the second laptop computer 21 to the second projector 25 for being projected onto the second screen 27 can be dynamic or static image signals representing content showed on the monitor of the second laptop computer 21.

The third subsystem 30 comprises a third laptop computer 31, a third server 33, a third image output module 34, a third projector 35, and a third screen 37. A third network access module 32 is comprised by the third server 33 for the third laptop computer 31 to transmit image signals via physical network or wireless network. The third server 33 is also configured for transmitting image signals (and control commands) to the third image output module 34 via wireless network or local area network. The third server 33 and the third image output module 34 can also be separate components or processes within a single computer system and the third server 33 puts the image signals and control commands onto internal bus of the computer system for the third image output module 34. The third image output module 34 connects with the third projector 35 via VGA interface, RCA interface, S component interface, HDMI interface, or microwave transmission interface and the image signals are transmitted to the third projector 35 for being projected onto the third screen 37. The image signals transmitted by the third laptop computer 31 to the third projector 35 for being projected onto the third screen 37 can be dynamic or static image signals representing content showed on the monitor of the third laptop computer 31.

Since the three subsystems 10, 20, 30 locate in three same or different areas or regions, the first server 13, the second server 23, and the third server 33 are connected with one another via the local area network (LAN), the virtual private network (VPN), the metropolis area network (MAN), or the wide area network (WAN). Each of the servers 13, 23, 33 can not only receive the image signals from the signal source of the same subsystem and transmit the image signals and control commands to the image output module of the same subsystem but receive the image signals and control commands from one another and transmit the image signals and control commands to image output module of different subsystem via one of the physical network mentioned above.

Apart from using laptop computers as the signal sources in each subsystem, desktop computers, personal digital assistants (PDAs), mobile phones, or digital CD/HD players with network transmissibility can serve as the signal sources as well. Each subsystem also can have more than one signal source of the same type or different type. The first server 13, the second server 23, and the third server 33 (or the computer systems each composed by each server and the corresponding first image output module 14, the second image output module 24, or the third image output module 34) can be network servers, workstations, mainframes, or personal computers (PC) with network connectivity, in which the network access modules 12, 22, 32 can be physical or wireless network interfaces, such as the IEEE 802.11 a/b/g/n compliant wireless network communication interface, built in the network servers, workstations, mainframes, or personal computers. Additionally, the final playback of the image is accomplished in the first exemplary embodiment in Fig.5 by each of the projectors 15, 25, 35 projecting the image onto each of the screens 17, 27, 27. In other embodiments of the present invention, however, any digital/analog projector or digital/analog monitor with VGA interface, RCA interface, S component interface, HDMI interface, or microwave transmission interface can also be applied as the playback devices in the present invention, which means that the display system disclosed in the present invention can be applied not only on meeting or briefing conditions using projectors and screens but also on exhibitions or advertising scenes using flat panel displays.

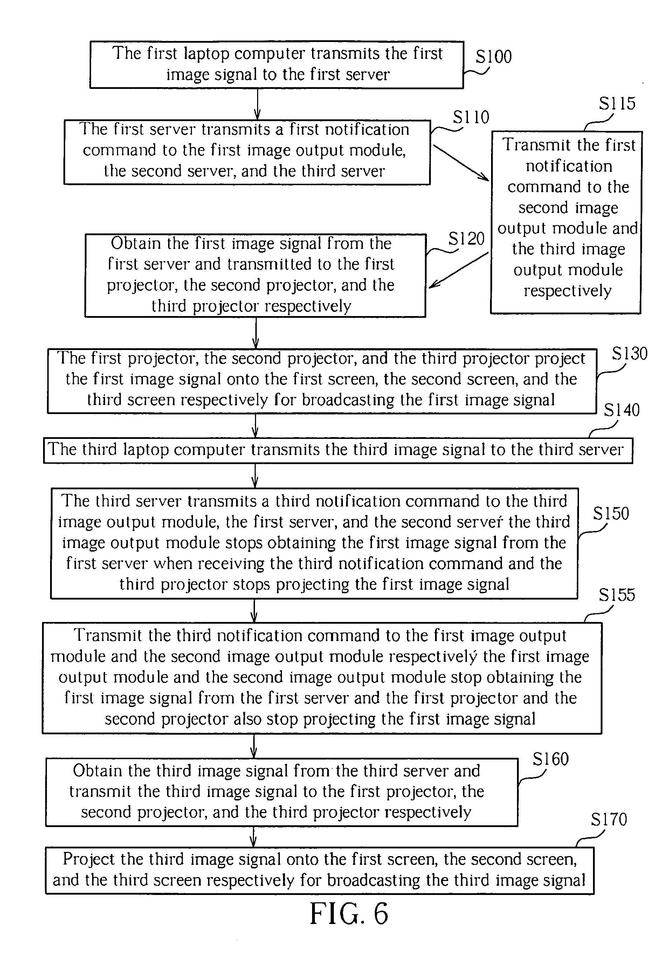

For the application of the synchronous display system 1 in Fig.5, the first exemplary embodiment of a corresponding synchronous display method is shown in Fig.6 and as follows:

| | |
|---|---|
| Step S100: | the first laptop computer transmits the first image signal to the first server; |
| Step S110: | the first server transmits a first notification command to the first image output module, the second server, and the third server when receiving the first image signal; |
| Step S115: | the second server and the third server transmit the first |
| | notification command to the second image output module and the third image output module respectively when receiving the first notification command; |
| Step S120: | the first image output module, the second image output module, and the third image output module obtain the first image signal from the first server and transmit the first image signal to the first projector, the second projector, and the third projector respectively via VGA interface, RCA interface, S component interface, HDMI interface, or microwave transmission interface; |
| Step S130: | the first projector, the second projector, and the third projector project the first image signal onto the first screen, the second screen, and the third screen respectively for broadcasting the first image signal; |
| Step S140: | the third laptop computer transmits the third image signal to the third server; |
| Step S150: | the third server transmits a third notification command to the third image output module, the first server, and the second server when receiving the third image signal; the |
| | third image output module stops obtaining the first image signal from the first server (Step S120) when receiving the third notification command and the third projector stops projecting the first image signal (Step S130) at the same time; |
| Step S155: | the first server and the second server transmit the third notification command to the first image output module and the second image output module respectively when receiving the third notification command; the first image output module and the second image output module stop obtaining the first image signal from the first server (Step S120) and the first projector and the second projector also stop projecting the first image signal (Step S130) at the same time; |
| Step S160: | the first image output module, the second image output module, and the third image output module obtain the third image signal from the third server and transmit the third image signal to the first projector, the second projector, and the third projector respectively via VGA |
| | interface, RCA interface, S component interface, HDMI interface, or microwave transmission interface; |
| Step S170: | the first projector, the second projector, and the third projector project the third image signal onto the first screen, the second screen, and the third screen respectively for broadcasting the third image signal. |

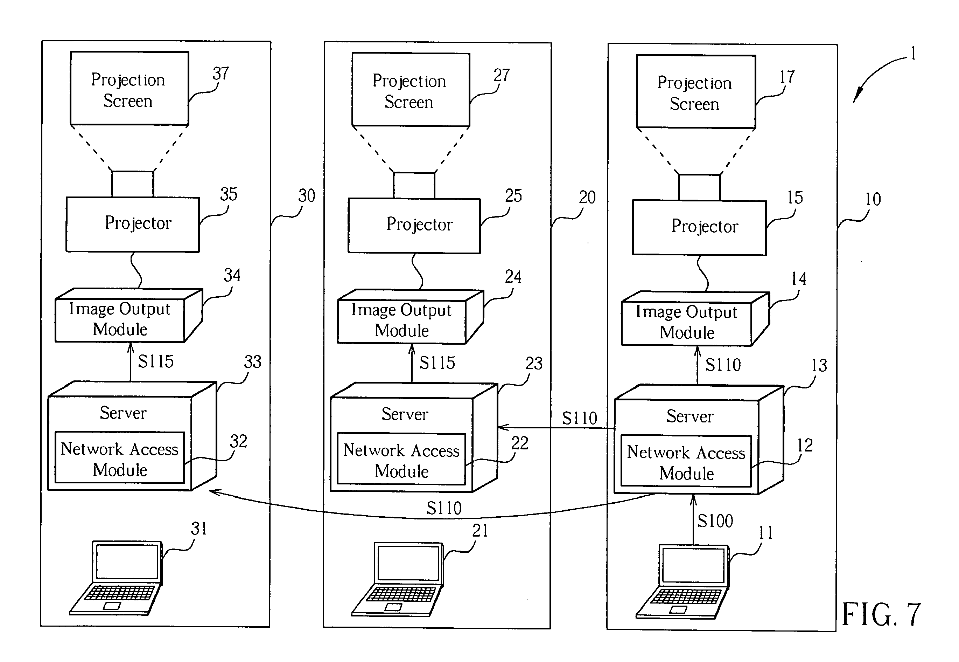

Please also refer to Fig.7 to Fig.11, which are illustrations of the operation of the first exemplary embodiment according to the present invention. Assume that the first subsystem 10 locates in area A, the second subsystem 20 locates in area B, and the third subsystem 30 locates in area C. As Fig.7 shows, when the first laptop computer 11 in area A calls for synchronous briefing in area A, area B, and area C, the first laptop computer 11 first establishes network connection with the first server 13 through the first network access module 12. In Step S100, the first laptop computer 11 transmits image data (first image signal specifically) for briefing to the first server 13 via wireless network or local area network. When receiving the first image signal through the first network access module 12, the first server 13 transmits a first notification command to the first image output module 14 for notifying the first image output module 14 and the first projector 15, to which the first image output module 14 connects, that the first laptop computer 11 calls for broadcasting image data. The first server 13 in area A also transmits the first notification command to the second server 23 in area B and the third server 33 in area C via the Internet (LAN, VPN, MAN, OR WAN), simultaneously or in later time (Step S110). Once the second server 23 and the third server 33 receive from the first server 13 the first notification command for broadcasting the first image signal, notification command is also transmitted to the second image output module 24 and the third image output module 34 respectively by the second server 23 and the third server 33. The second image output module 24 along with the connecting second projector 25 and the third image output module 34 along with the connecting third projector 35 are then aware that the first laptop computer 11 in area A requires to broadcast (Step S115). The projectors 15, 25, 35 in area A, area B, and area C respectively are now ready for synchronous broadcasting.

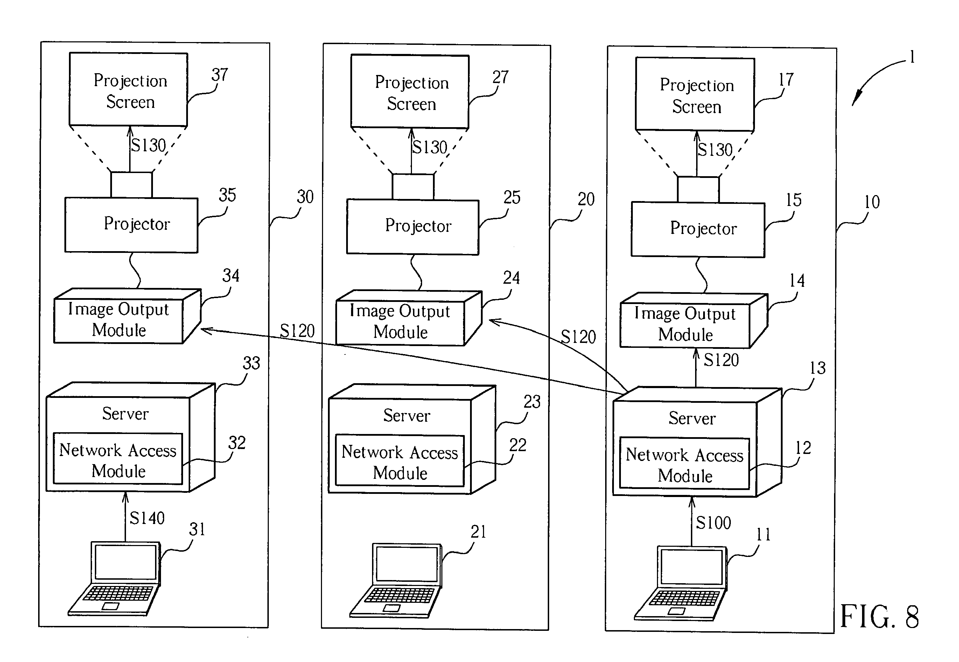

For the first embodiment of the display method in Fig.8, the first image output module 14 receives from the first server 11 the first image signal transmitted by the first laptop computer 11 and then transmits the first image signal to the first projector 15 via VGA interface, RCA interface, S component interface, HDMI interface, or microwave transmission interface. Practically Step S100 can be performed at the same time, i.e., the first laptop computer 11 continuously transmits updated first image signal to the first server 13. The second image output module 24 in area B and the third image output module 34 in area C also receive from the first server 13 via the Internet the first image signal transmitted by the first laptop computer 11 and then transmits the first image signal to the second projector 25 and the third projector 35 respectively via VGA interface, RCA interface, S component interface, HDMI interface, or microwave transmission interface (Step S120). The projectors 15, 25, 35 in the three areas receive the first image signal respectively and broadcasting the first image signal synchronously by projecting the first image signal onto the first screen 17, the second screen 27, and the third screen 37 respectively. The display system at this time has synchronous broadcasting of the image data in area A, area B, and area C, the image data being from the first laptop computer 11 in area A.

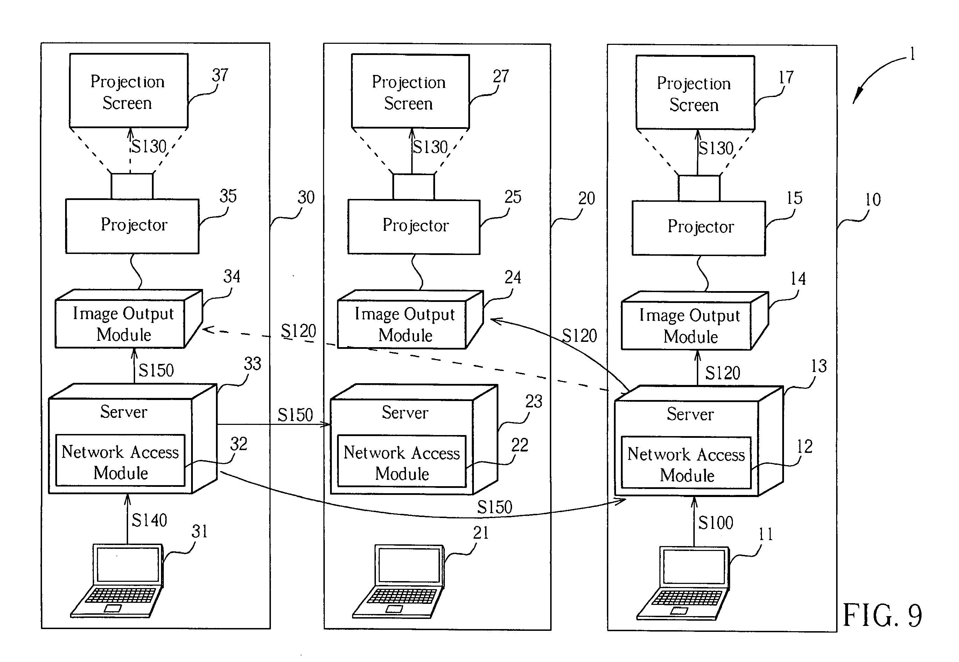

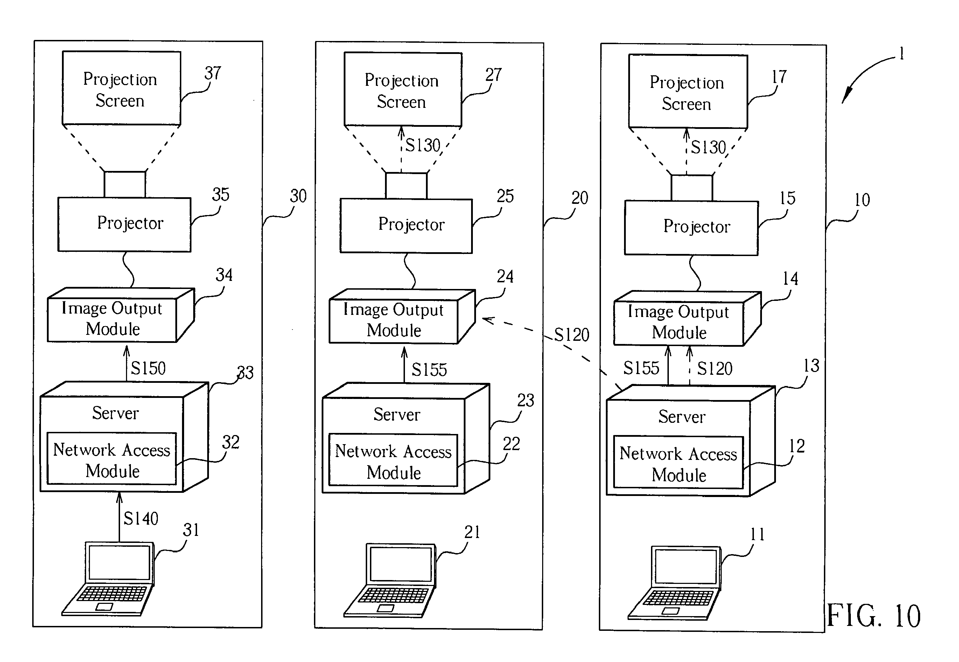

Please refer to Fig.9. After the first laptop computer 11 in area A finishes briefing and the third laptop computer 31 in area C needs to take on the next briefing or in other case, the third laptop computer 31 in area C has a higher priority and interrupts the ongoing briefing from the first laptop computer 11, the third laptop computer 31 establishes network connection with the third server 33 through the third network access module 32. In Step S140, the third laptop computer 31 transmits image data (third image signal specifically) for briefing to the third server 33 via wireless network or local area network. In Step S150, when receiving the third image signal through the third network access module 32, the third server 33 transmits a third notification command to the third image output module 34 for notifying the third image output module 34 and the third projector 35, to which the third image output module 34 connects, that the third laptop computer 31 calls for broadcasting image data. The third image output module 34 then stops receiving the first image signal from the first server 13 when receiving the third notification command (the original arrow for Step S120 in Fig.9 is now turned to be dashed line to represent its cancellation). The third projector 35 also stops broadcasting the first image signal (the original arrow for Step S130 in Fig.9 is now turned to be dashed line to represent its cancellation). The third server 33 in area C also transmits the third notification command to the first server 13 in area A and the second server 23 in area B via the Internet (LAN, VPN, MAN, OR WAN), simultaneously or in later time (Step S150). Please refer to Fig.10. Once the first server 13 and the second server 23 receive from the third server 33 the third notification command for broadcasting the third image signal, notification command is also transmitted to the first image output module 14 and the second image output module 24 respectively by the first server 13 and the second server 23. The first image output module 14 along with the connecting first projector 15 and the second image output module 24 along with the connecting second projector 25 are then aware that the third laptop computer 31 in area C is asking for broadcasting. In Step S155, when receiving the third notification command respectively, the first image output module 14 and the second image output module 24 also stop receiving the first image signal from the first server 13 (the original arrows for Step S120 in Fig.10 are now turned to be dashed lines to represent their cancellation). The first projector 15 and the second projector 25 also stop broadcasting the first image signal (the original arrows for Step S130 in Fig.10 are now turned to be dashed lines to represent their cancellation).

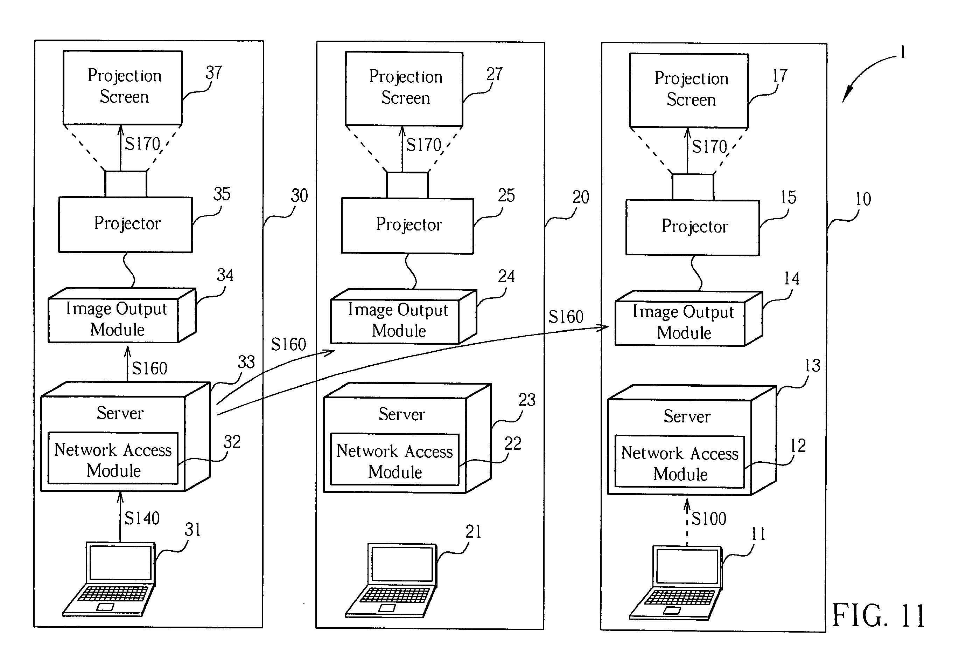

For the first embodiment of the display method in Fig.11, the third image output module 34 receives from the third server 31 the third image signal transmitted by the third laptop computer 31 and then transmits the third image signal to the third projector 35 via VGA interface, RCA interface, S component interface, HDMI interface, or microwave transmission interface. Practically Step S140 can be performed at the same time, i.e., the third laptop computer 31 continuously transmits updated third image signal to the third server 33. The second image output module 24 in area B and the first image output module 14 in area A also receive from the third server 33 via the Internet the third image signal transmitted by the third laptop computer 31 and then transmits the third image signal to the second projector 25 and the first projector 15 respectively via VGA interface, RCA interface, S component interface, HDMI interface, or microwave transmission interface (Step S160). The projectors 15, 25, 35 in the three areas receive the third image signal respectively and broadcasting the third image signal synchronously by projecting the third image signal onto the first screen 17, the second screen 27, and the third screen 37 respectively. The display system at this time has synchronous broadcasting of the image data in area A, area B, and area C, the image data being from the third laptop computer 31 in area C.

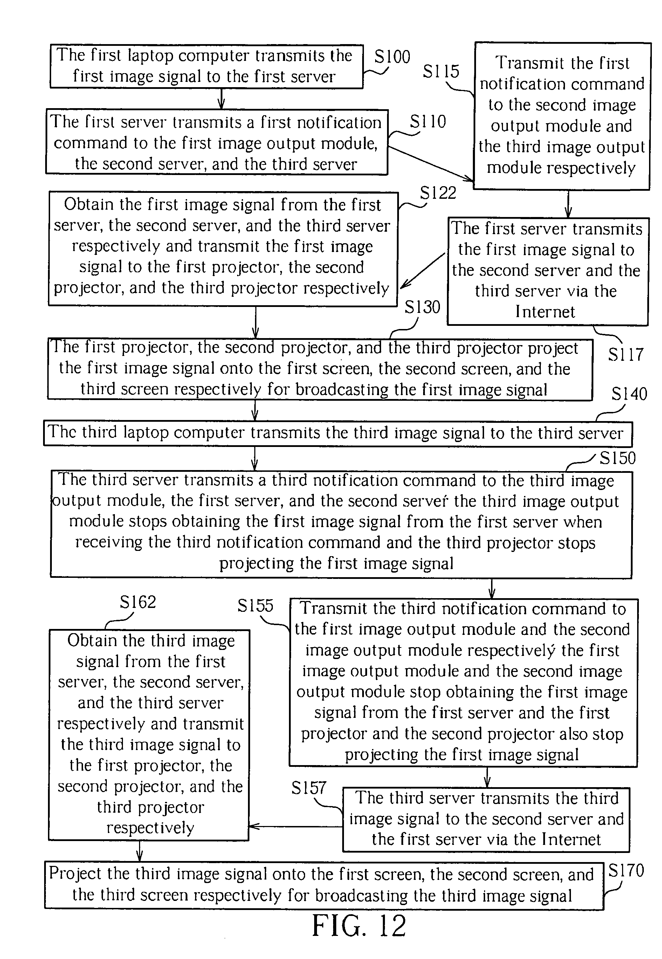

Step S120 or Step S160 in the first embodiment teaches that the image output modules 14, 24, 34 in each area receive the same image signal directly from one server (the first server 13 in Step S120 or the third server 33 in Step S160) via the Internet. In a second embodiment of the present invention, however, the image signal can also be transmitted by one server to other servers in other areas, and then the image output module in each corresponding area receives the image signal from the local server. The second embodiment of the display method is shown in Fig.12 wherein:

| | |
|---|---|
| Step S117: | the first server transmits the first image signal to the second server and the third server via the Internet; |
| Step S122: | the first image output module, the second image output module, and the third image output module obtain the first image signal from the first server, the second server, and the third server respectively and transmit the first image signal to the first projector, the second projector, and the third projector respectively via VGA interface, RCA interface, S component interface, HDMI interface, or microwave transmission interface, |

And

| | |
|---|---|
| Step S157: | the third server transmits the third image signal to the second server and the first server via the Internet; |
| Step S162: | the first image output module, the second image output module, and the third image output module obtain the third image signal from the first server, the second server, and the third server respectively and transmit the third |
| | image signal to the first projector, the second projector, and the third projector respectively via VGA interface, RCA interface, S component interface, HDMI interface, or microwave transmission interface. |

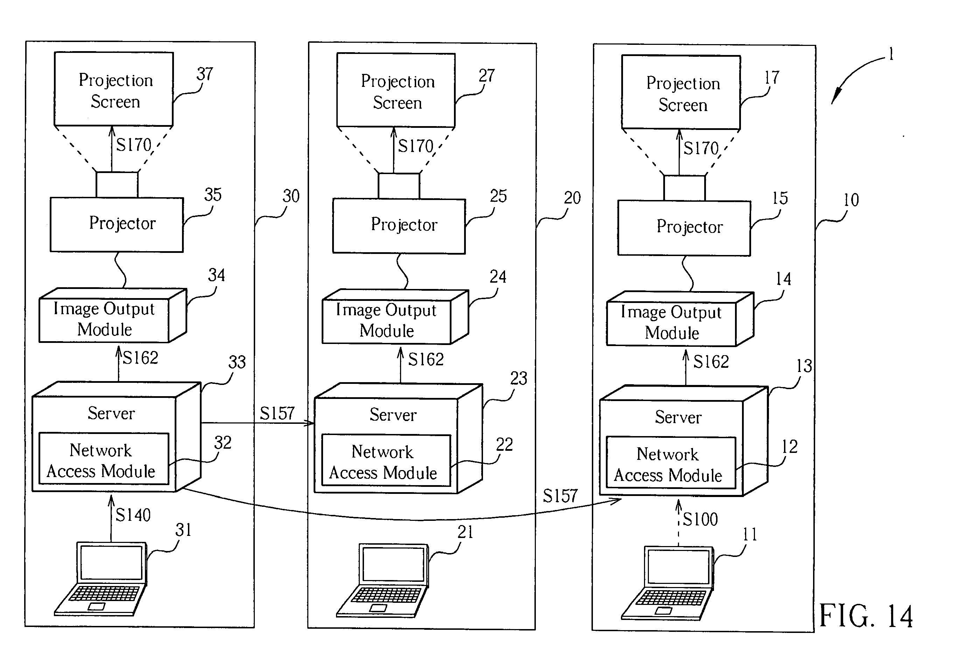

The illustration of the operation including Step S117 and Step S122 is shown in Fig.1 3 and the illustration of the operation including Step S157 and Step S1 62 is shown in Fig.14. Additionally, although the first embodiment and the second embodiment of the display method aforementioned focus on active data transmission of the subsystem 10 in area A and the subsystem 30 in area C, subsystem 20 in area B (or even more other subsystems) can perform exactly the same procedures as the subsystem 10 or the subsystem 30. Furthermore, the first embodiment and the second embodiment can have hybrid form in the present invention. Each subsystem should not be limited in the way to receive the image signal. For example, in another embodiment of the present invention, the second image output module 24 is configured to receive the first image signal and transmits the first image signal to the second projector 25 from the first server 13 via the Internet while the third image output module 34 is configured to receive the first image signal directly from the third server 33, in which the first image signal is transmitted by the first server 13 via the Internet in advance, and transmits the first image signal to the third projector 35. Any combination of how the image signal is transmitted should be included in the scope of the present invention.

The invention can be summarized as that by connecting various briefing subsystems in different areas via the Internet, synchronous briefing or visual playback in different areas and capability of receiving multiple image sources are achieved. One or more image sources are configured in each briefing subsystem and each connected to a server of the subsystem via physical or wireless network. The server of each briefing subsystem transmits briefing or image data to a playback device for outputting purpose via physical or wireless network. The internet-connected servers in all the briefing subsystems are capable of transmitting briefing or image data to one another via the Internet such that briefing or image outputting in one subsystem can be synchronously performed in other subsystems.

All combinations and sub-combinations of the above-described features also belong to the invention.

## Claims

1. A display method capable of receiving data from multiple sources and having synchronous multiple outputs, the method comprising steps:
a first signal source (11) transmitting a first image signal to a first server (13);
the first server (13) transmitting a first notification command to a plurality of playback devices (15, 25, 35), the plurality of playback devices (15, 25, 35) comprising at least a first playback device (15) and a second playback device (25);
the plurality of playback devices (15, 25, 35) playing the first image signal when receiving the first notification command; and
**characterised by**:
a second server (23) transmitting a second notification command to the plurality of playback devices (15, 25, 35) when a second signal source (21) transmits a second image signal to the second sever (23), the plurality of playback devices (15, 25, 35) stopping playing the first image signal and beginning to play the second image signal when receiving the second notification command.

2. The display method of claim 1, further **characterized by** steps:
the plurality of playback devices (15, 25, 35) receiving the first image signal from the first server (13) by a plurality of image output modules (14, 24, 34) respectively and playing the first image signal; and
the plurality of playback devices (15, 25, 35) receiving the second image signal from the second server (23) by the plurality of image output modules (14, 24, 34) respectively and playing the second image signal when the second signal source (21) transmits the second image signal to the second server (23).

3. The display method of claim 1, further **characterized by** steps:
the first server (1 3) transmitting the first image signal to the second server (23);
the first playback device (1 5) receiving the first image signal from the first server (13) by a first image output module (14) and playing the first image signal, the second playback device (25) receiving the first image signal from the second server (23) by a second image output module (24) and playing the first image signal;
the second server (23) transmitting the second image signal to the first server (13) when the second signal source transmits the second image signal to the second server (23); and
the plurality of playback devices (15, 25, 35) stopping playing the first image signal, the first playback device (1 5) beginning to receive the second image signal from the first server (13) by the first image output module (14) and play the second image signal, and the second playback device (25) beginning to receive the second image signal from the second server (23) by the second image output module (24) and play the second image signal.

4. The display method of claim 1, **characterized in that t**he first signal source (11) transmitting the first image signal to the first server (1 3) comprises step: the first server (13) receiving the first image signal from the first signal source (11) by a first network access module (12) either via physical network or via wireless network.

5. The display method of claim 1, **characterized in that** the second signal source (21) transmitting the second image signal to the second server (23) comprises step: the second server (23) receiving the second image signal from the second signal source (21) by a second network access module (22) either via physical network or via wireless network.

6. The display method of claim 1, **characterized in that** the first server (13) transmitting the first notification command to the plurality of playback devices (15, 25, 35) comprises steps:
the first server (13) transmitting the first notification command to the first playback device (15) and the second server (23); and
the second server (23) transmitting the first notification command to the second playback device (25).

7. The display method of claim 1, **characterized in that** the second server (23) transmitting the second notification command to the plurality of playback devices (15, 25, 35) comprises steps:
the second server (23) transmitting the second notification command to the second playback device (25) and the first server (1 3); and
the first server (1 3) transmitting the second notification command to the first playback device (15).

8. A display system (1) having multiple sources and synchronous multiple outputs, the display system comprising:
a plurality of signal sources (11, 21, 31) comprising at least a first signal source (11) and a second signal source (21) for generating a first image signal and a second image signal respectively;
**characterized by**:
a plurality of servers (13, 23, 33) inter-connected with one another and comprising at least a first server (1 3) and a second server (23) wherein the first server (13) is for receiving the first image signal from the first signal source (11) and the second server (23) is for receiving the second image signal from the second signal source (21); and
a plurality of playback devices (15,25, 35) comprising at least a first playback device (15) and a second playback device (25), the plurality of servers (13, 23, 33) transmitting notification command to the plurality of playback devices (15, 25, 35) and the plurality of playback devices (15, 25, 35) playing the first image signal or the second image signal when receiving the notification command.

9. The display system of claim 8, further **characterized by** a plurality of image output modules (14, 24, 34) comprising at least a first image output module (14) and a second image output module (24) connected to the first server (13) and the second server (23) respectively for receiving the first image signal or the second image signal from the plurality of servers (13, 23, 33).

10. The display system of claim 8, **characterized in that** the first server (13) comprises a first network access module (12) and the second server comprises a second network access module (22), for receiving the first image signal from the first signal source (11) and the second image signal from the second signal source (21) respectively.

11. The display system of claim 8, **characterized in that** the plurality of servers (13, 23, 33) is further utilized for transmitting the received image signals to one another via network.
